# EUROPÄISCHE PATENTSCHRIFT

(11) **EP 0 548 791 B1**
(45) Veröffentlichungstag und Bekanntmachung des Hinweises auf die Patenterteilung: **13.03.1996**
(21) Anmeldenummer: 92121456.5
(22) Anmeldetag: 17.12.1992
(51) Int. Cl.: C08J 3/09, C08L 81/02

(54) **Polyarylensulfid-Lösungen, Verfahren zu deren Herstellung und deren Verwendung**
Solutions of polyarylene sulfides, process for their preparation and their use
Solutions de polysulfures d'arylène, procédé pour leur préparation et leur utilisation

(30) Priorität: 20.12.1991 DE 4142306
(43) Veröffentlichungstag der Anmeldung: 30.06.1993
(73) Patentinhaber: HOECHST AKTIENGESELLSCHAFT, D-65926 Frankfurt am Main (DE)
(72) Erfinder: Zeitler, Herbert, W-8934 Grossaitingen (DE)

(56) Entgegenhaltungen:
- EP-A- 256 757
- EP-A- 315 838
- EP-A- 336 124
- US-A- 3 380 951
- US-A- 5 043 112

## Beschreibung

Die vorliegende Erfindung betrifft Polyarylensulfid-Lösungen, die unter Verwendung eines neuen Lösungsmittels hergestellt worden sind, Verfahren zu deren Herstellung und deren Verwendung, insbesondere bei der Herstellung von geformten Gebilden oder bei Reinigungsverfahren.

Polyarylensulfide, wie Polyphenylensulfid (PPS), sind bekanntermaßen äußerst schwerlösliche Polymere. Die Lösungsmittelresistenz von PPS, insbesondere gegen organische Lösungsmittel bei hohen Temperaturen ist einer der für diese Polymerklasse üblicherweise geltend gemachten Vorteile. So wird z.B. in der EP-A-398,094 darauf hingewiesen, daß bislang kein Lösungsmittel für PPS bekannt geworden ist, das dieses Polymere bei Temperaturen von weniger als etwa 200 °C löst. Im "Handbook of Fiber Science and Technology, Vol. III, Stichwort: High Technology Fibers, Marcel Dekker Inc., New York and Basel (1985) wird auf S. 337 ausgeführt, daß PPS in keinem bekannten Lösungsmittel unterhalb von 200 °C löslich ist. Diese Aussagen werden in einer Reihe weiterer wissenschaftlicher Arbeiten bestätigt, beispielsweise in Journal of Applied Polymer Science, Vol. 32, p. 3959-69 und p. 4479-90 (1986).

Bislang in der Technik üblicherweise verwendetes Lösungsmittel für PPS ist α-Chlornaphthalin. Damit lassen sich Lösungen bei Temperaturen oberhalb von 200 °C herstellen.

Der vorliegenden Erfindung liegt die Aufgabe zugrunde, ein Lösungsmittel für Polyarylensulfide bereitzustellen, mit dem die Herstellung und Verarbeitung von Lösungen bei einer möglichst niedrigen Temperatur durchgeführt werden kann. Ferner soll mit der Erfindung ein Lösungsmittel für Polyarylensulfide bereitgestellt werden, das im Vergleich zu den bislang benutzten Lösungsmitteln relativ einfach verdampfbar ist.

Solche Lösungen sind aus einer Reihe von Gründen besonders erstrebenswert. So ist es z.B. aus verfahrenstechnischen Gründen im allgemeinen bevorzugt, Lösungen zur Herstellung von geformten Gebilden bei möglichst niedrigen Temperaturen zu verarbeiten.

Ferner ist es für eine Reihe von Anwendungen erforderlich, das Lösungsmittel nach der Verarbeitung zu entfernen. Es liegt auf der Hand, daß dieses umso einfacher durchzuführen ist, je besser das Lösungsmittel bei einer vorgegebenen Temperatur verdampft werden kann.

Die vorliegende Erfindung beruht auf der überraschenden Erkenntnis, daß Chinolin oder dessen Derivate ein ausgezeichnetes Lösevermögen für Polyarylensulfide besitzen und daß man mit diesem Lösungsmittel noch bei Temperaturen unterhalb von 200 °C stabile Lösungen herstellen kann.

Die vorliegende Erfindung betrifft daher Lösungen enthaltend Polyarylensulfid und als Lösungsmittel Chinolin und/oder Isochinolin und/oder deren substituierten Derivaten, wobei das Lösungsmittel bei 25 °C flüssig ist, sowie die Verwendung dieser Lösungsmittel zum Lösen von Polyarylensulfid.

Als Lösungsmittel kann eine Verbindung oder auch ein Gemisch von Verbindungen verwendet werden, sofern dieses bei 25 °C flüssig ist.

Unter substituierten Derivaten von Chinolin oder Isochinolin sind alle Derivate mit irgendwelchen Substituenten zu verstehen, sofern diese bei 25 °C flüssig sind. Beispiele für geeignete Substituenten sind Hydroxyl-, Alkyl oder Alkoxygruppen, wie Methyl, Ethyl, Propyl, Butyl, Pentyl, Hexyl oder Octyl oder die entsprechenden Alkoxygruppen. Vorzugsweise bedeuten Substituenten Methylgruppen. Substituierte Chinoline oder Isochinoline weisen bevorzugt zwei oder ganz besonders bevorzugt einen Substituenten auf.

Unter Polyarylensulfiden sind ganz allgemein Polymere zu verstehen, die wiederkehrende Struktureinheiten des Typs -Ar-S- aufweisen, wobei Ar ein beliebiger aromatischer Rest sein kann, beispielsweise ein Naphthylenrest oder insbesondere ein Phenylenrest.

Bei den Polyphenylensulfiden (PPS) kann es sich beispielsweise um Poly-m-phenylensulfide oder vorzugsweise um Poly-p-phenylensulfide handeln. Die unterschiedlichen wiederkehrenden Struktureinheiten können auch als Blöcke angeordnet sein. Die Polyphenylensulfide können gegebenenfalls geringfügig verzweigt sein. Vorzugsweise handelt es sich um im wesentlichen lineares Polyphenylensulfid.

Besonders handelt es sich bei dem Polyphenylensulfid (PPS) um ein im wesentlichen lineares PPS, das eine Schmelzviskosität von 50 bis 1000 Pa*s aufweist, gemessen bei 300 °C und einer Schergeschwindigkeit von 200 sec⁻¹.

Ganz besonders bevorzugt handelt es sich bei dem Polyphenylensulfid (PPS) um Gemische aus hoch- und niedermolekularen PPS-Typen, wie sie z.B. in der EP-A-407,887 offenbart sind. Die hochmolekularen PPS-Typen sind dabei insbesondere durch einen Melt-Flow-lndex Wert von höchstens 100 g/10 min gekennzeichnet, und die niedermolekularen PPS-Typen sind dabei insbesondere durch einen
Melt-Flow-Index Wert von mindestens 120 g/10 min gekennzeichnet, wobei die Messung bei 315 °C in einem Zwick-Rheometer bei einer Stempelbelastung von 5 kg und einem Düsenbohrungsdurchmesser von 2,095 mm und einer Düsenbohrungslänge von 8 mm erfolgt.

Vorzugsweise vewendet man als Lösungsmittel ein- oder zweifach niederalkylsubstituiertes Chinolin oder insbesondere unsubstituiertes Chinolin.

Die erfindungsgemäßen Lösungen enthalten - in Abhängigkeit von der jeweiligen Temperatur der Lösung - unterschiedliche Mengen an gelöstem Polyarylensulfid.

Bevorzugt sind Lösungen, die das gelöste Polymere in einer Konzentration von 0,2 bis 1,2 Gew.%, bezogen auf die Lösung, bei einer Temperatur von 170 °C enthalten.

Die erfindungsgemäßen Lösungen zeichnen sich dadurch aus, daß sie auch bei relativ niedrigen Temperaturen noch stabil sind. Die Erfindung betrifft daher vorzugsweise Lösungen, die eine Temperatur zwischen 170 und 200 °C aufweisen.

Die Erfindung betrifft auch ein Verfahren zur Herstellung der erfindungsgemäßen Lösung umfassend die Schritte:
i) Vermischen einer vorgegebenen Menge von Polyarylensulfid mit einer vorgegebenen Menge an Chinolin und/oder Isochinolin und/oder deren substituierten Derivaten als Lösungsmittel, wobei das Lösungsmittel bei 25 °C flüssig ist,
ii) Erhitzen der Mischung auf Temperaturen von mindestens 170 °C, bevorzugt über 200 °C, so daß sich zumindest ein Teil des Polymeren in besagtem Lösungsmittel löst, und
iii) gegebenenfalls Abtrennen etwaiger ungelöster Bestandteile des Polymeren.

Im allgemeinen wird in Schritt i) zunächst eine Suspension des Polyarylensulfids im Lösungsmittel hergestellt, und durch das Erhitzen in Schritt ii) zumindest ein Teil des Polymeren aufgelöst. Das Abtrennen etwaiger ungelöster Bestandteile kann durch die dem Fachmann bekannten Techniken erfolgen, beispielsweise durch Filtration der heißen Lösung.

Zur Herstellung der Lösungen kann das Polyarylensulfid in beliebiger Form eingesetzt werden; insbesondere verwendet man Formen, bei denen das Polyarylensulfid ein möglichst großes Oberfläche zu Volumen Verhältnis aufweist, beispielsweise Granulat oder Pulver.

Die erfindungsgemäße Lösung läßt sich zur Herstellung geformter Gebilde, insbesondere von Fasern, Folien und Beschichtungen, zum Reinigen von Polyarylensulfiden, insbesondere zur Herstellung hochreiner Polyarylensulfide oder zur Bestimmung des Molekulargewichts von Polyarylensulfiden einsetzen.

Dabei können alle gängigen Methoden der Molekulargewichtsbestimmung von Polymeren in Lösungen zur Anwendung kommen, beispielsweise die Bestimmung der Lösungsviskosität in Abhängigkeit von der Konzentration, sowie der Lichtstreuung, der Siedepunkts- oder Erstarrungspunktsänderungen oder des osmotischen Druckes der Polymerlösung. Zur Herstellung hochreiner Polyarylensulfide können alle an sich üblichen Reinigungsoperationen von Polymeren eingesetzt werden, bei denen Polymerlösungen zum Einsatz kommen; beispielsweise läßt sich das Polyarylensulfid durch Umkristallisieren reinigen, wobei vorzugsweise eine Heißfiltration der Lösung vorgeschaltet wird.

Die Erfindung betrifft auch die Verwendung der Lösung für diese Zwecke.

Die Herstellung geformter Gebilde unter Verwendung der erfindungsgemäßen Lösung kann nach Trocken- oder Naßformverfahren erfolgen.

Die Erfindung betrifft daher auch Trockenformverfahren zur Herstellung von Folien und insbesondere von Fasern aus Polyarylensulfiden umfassend die Schritte
a1) Herstellung einer Lösung wie oben definiert,
b1) Extrudieren besagter Lösung bei Temperaturen oberhalb von 170 °C durch eine Düse, welche Öffnungen in vorgegebener Anzahl und Form enthält, so daß das gewünschte geformte Gebilde entsteht, und
c1) Verdampfen des Lösungsmittels unter Anwendung erhöhter Temperatur, so daß ein lösungsmittelärmeres geformtes Gebilde entsteht, das eine für die weitere Verarbeitung ausreichende mechanische Stabilität und Klebfreiheit aufweist.

Die Erfindung betrifft daher auch Naßformverfahren zur Herstellung von Folien und insbesondere von Fasern aus Polyarylensulfiden umfassend die Schritte:
a2) Herstellung einer Lösung wie oben definiert,
b2) Extrudieren besagter Lösung bei Temperaturen oberhalb von 170 °C durch eine Düse, welche Öffnungen in vorgegebener Anzahl und Form enthält, so daß ein primäres geformtes Gebilde entsteht, und
c2) Einbringen dieses geformten Gebildes in ein Bad enthaltend eine Koagulationsflüssigkeit, so daß das Lösungsmittel aus besagtem primären geformten Gebilde entfernt wird und das gewünschte geformte Gebilde durch Koagulation des Primärgebildes entsteht, das eine für die weitere Verarbeitung ausreichende mechanische Stabilität aufweist.

Neben diesen Verfahren zur Herstellung geformter Gebilde lassen sich die erfindungsgemäßen Lösungen vorteilhafterweise zur Herstellung von Beschichtungen einsetzen. Die Erfindung betrifft daher auch ein solches Verfahren umfassend die Schritte:
a3) Herstellung einer Lösung wie oben definiert,
b3) Aufbringen besagter Lösung bei Temperaturen von mindestens 170 °C auf ein Substrat unter Ausbildung eines Films besagter Lösung auf besagtem Substrat, und
c3) Entfernen des Lösungsmittels aus besagtem Film unter Anwendung von erhöhter Temperatur und/oder Anlegen eines Unterdruckes.

Die nach den obigen Verfahren erhältlichen geformten Gebilde und Beschichtungen, zeichnen sich durch hervorragende Transparenz aus.

Ferner wurde gefunden, daß sich die erfindungsgemäßen Lösungsmittel zum Reinigen von Vorrichtungen verwenden lassen, die bei der Herstellung oder der Verarbeitung von Polyarylensulfid eingesetzt worden sind. Dabei kann es sich um ganze Vorrichtungen sowie um Teile davon handeln. Solche Vorrichtungen weisen nach dem bestimmungsgemäßen Gebrauch üblicherweise Rückstände von Polyarylensulfid gegebenenfalls in Kombination mit anderen Zusätzen auf, die vor einer Wiederverwendung dieser Vorrichtungen entfernt werden müssen. Das üblicherweise angewandte Ausbrennen läßt sich bei Vorrichtungen mit Polyarylensulfid Verunreinigungen nur unter erschwerten Bedingungen ausführen, insbesondere, wenn diese zusammen mit Vorrichtungen ausgebrannt werden sollen, die bei der Herstellung bzw. Verarbeitung anderer Polymerer, wie Polyestern, eingesetzt worden sind. Beim Verbrennen polyarylensulfid-haltiger Rückstände entstehen korrodierende Gase, die sich nachteilig auf Metallteile auswirken können. Die Reinigungsschwierigkeiten bei mit Polyarylensulfid verschmutzten Vorrichtungen machen das Produkt sehr schwer handhabbar.

Es hat sich jetzt gezeigt, daß mit den erfindungsgemäßen Lösungsmitteln eine einfache und schonende Art der Reinigung von mit Polyarylensulfid verunreinigten Vorrichtungen möglich ist.

Kocht man beispielsweise mit PPS verunreinigte Vorrichtungsteile mit Chinolin in einem Metalltopf mit Flanschverschluß für zwei bis vier Stunden am Rückfluß und kühlt vor dem Öffnen des Topfes auf Raumtemperatur ab, so kann man beispielsweise Düsenplatten mit vollständig freien Düsenbohrungen erhalten. Vor der Berührung der gereinigten Teile mit ungeschützten Händen empfiehlt es sich, die chinolinfeuchten Teile mit einem weiteren und niedrig siedenden organischen Lösungsmittel, beispielsweise mit Aceton, abzuspülen. Die Reinigung wird zweckmäßigerweise durch den Einsatz von Ultraschall unterstützt; wodurch die Reinigungsgeschwindigkeit nochmals vergrößert wird.

Das Lösungsmittel bzw. das Lösungsmittelgemisch kann vom bei Raumtemperatur ausgefallenen PPS abgetrennt, beispielsweise abfiltriert werden. Vorzugsweise setzt man das Lösungsmittel nach eventueller Reinigung wieder zu diesem Zweck ein.

In einer weiteren Ausführungsform des erfindungsgemäßen Reinigungsverfahrens wurden sowohl das Lösungsmittel als auch das darin gelöste PPS einer Wiederverwendung zugeführt. Zu diesem Zweck wird die Lösung vorzugsweise einer Reinigung unterzogen, beispielsweise einer Heißfiltration, und das nach dem Abkühlen ausgefallene PPS wird vom Lösungsmittel abgetrennt.

Bei den erfindungsgemäß zu reinigenden Vorrichtung handelt es sich insbesondere um Anlagenteile, die bei der Verarbeitung von Polyarylensulfid eingesetzt und mit diesem in Berührung kommen.

Insbesondere handelt es sich dabei um Anlagenteile aus Spinnvorrichtungen oder aus Fasernachbehandlungseinrichtungen, wie um Spinndüsen, Filtereinrichtungen, Teile von Spinnpumpen, Galetten oder Fadenführer.

Ferner handelt es sich dabei um Vorrichtungen, die bei sonstigen Formgebungsverfahren von Polyarylensulfid eingesetzt werden, wie bei der Herstellung von Folien oder Spritzgußartikeln, beispielsweise um Extruder oder Extruderteile, wie Extruderschnecken, oder um Spritzgußformen.

Die nachfolgenden Beispiele erläutern die Erfindung ohne diese zu begrenzen.

### Beispiel 1: Herstellung von PPS-Lösungen

Unterschiedliche Mengen von Poly-p-phenylensulfid verschiedener Molekulargewichte werden in Chinolin eingewogen und bei Temperaturen von 210 bis 220 °C aufgelöst. Es werden so während einer Lösezeit von 20 bis 30 Minuten klare Lösungen mit folgendenen PPS-Konzentrationen (bei jeweils 170 °C) hergestellt:

| | |
|---|---|
| Lösung 1: | 1,2 g/dl, |
| Lösung 2: | 0,9 g/dl, |
| Lösung 3: | 0,75 g/dl, |
| Lösung 4: | 0,5 g/dl, und |
| Lösung 5: | 0,2 g/dl. |

### Beispiel 2: Bestimmung des Molekulargewichts und Struktureigenschaften von PPS-Lösungen nach der lösungsviskosimetrischen Methode

Die Viskosität der gemäß Beispiel 1 erhaltenen Lösungen wird mittels eines Ubbelohde I Kapillarviskosimeters (Typ 53010) bei einer Meßtemperatur von 180 °C ermittelt. Aus der Auftragung der Viskositätswerte gegen die unterschiedliche Polymerkonzentration der Meßlösungen und die Extrapolation gegen die Konzentration 0 g/dl läßt sich die sogenannte Grenzviskosität ermitteln.

### Beispiel 3: Herstellung von Beschichtungen unter Verwendung von PPS-Lösungen in Chinolin

Durch Auflösen von PPS in Chinolin bei 230 °C lassen sich klare Lösungen bis zu einer Konzentration von 5 g/dl herstellen. Werden solche Lösungen in entsprechend heiße Formen, z.B. eine Glasschale gegossen, so lassen sich durch Abdampfen mit Unterdruck (< 10 Torr) bei Temperaturen von 200 bis 230 °C amorphe, transparente Folien herstellen. An solchen Folien können sehr exakte spektroskopische Untersuchungen, wie IR-spektroskopische Analysen, durchgeführt werden.

## Patentansprüche

1. Lösungen enthaltend Polyarylensulfid und als Lösungsmittel Chinolin und/oder Isochinolin und/oder deren substituierte Derivate, wobei das Lösungsmittel bei 25°C flüssig ist.

2. Lösungen nach Anspruch 1, dadurch gekennzeichnet, daß das Polyarylensulfid Polyphenylensulfid (PPS) ist, insbesondere Poly-p-phenylensulfid.

3. Lösungen nach einem der Ansprüche 1 oder 2, dadurch gekennzeichnet, daß das Lösungsmittel ein- oder zweifach niederalkylsubstituiertes Chinolin oder insbesondere unsubstituiertes Chinolin ist.

4. Lösungen nach einem der Ansprüche 1 bis 3, dadurch gekennzeichnet, daß das gelöste Polymere in einer Konzentration von 0,2 bis 1,2 Gew.%, bezogen auf die Lösung, bei einer Temperatur von 170 °C vorliegt.

5. Lösungen nach einem der Ansprüche 1 bis 4, dadurch gekennzeichnet, daß die Lösung eine Temperatur zwischen 170 und 200 °C aufweist.

6. Lösungen nach einem der Ansprüche 2 bis 5, dadurch gekennzeichnet, daß es sich bei dem Polyphenylensulfid (PPS) um ein im wesentlichen lineares PPS handelt, das eine Schmelzviskosität von 50 bis 1000 Pa*s aufweist, gemessen bei 300 °C und einer Schergeschwindigkeit von 200 sec⁻¹.

7. Lösungen nach einem der Ansprüche 2 bis 6, dadurch gekennzeichnet, daß es sich bei dem Polyphenylensulfid (PPS) um Mischungen zweier im wesentlichen linearer PPS-Typen handelt, wovon der eine PPS-Typ durch einen Melt-Flow-lndex Wert von höchstens 100 g/10 min gekennzeichnet ist und der andere PPS-Typ durch einen Melt-Flow-lndex Wert von mindestens 120 g/10 min gekennzeichnet ist, wobei die Messung bei 315 °C bei einer Stempelbelastung von 5 kg und einem Düsenbohrungsdurchmesser von 2,095 mm und einer Düsenbohrungslänge von 8 mm erfolgt.

8. Verfahren zur Herstellung einer Lösung nach Anspruch 1 umfassend die Schritte:
i) Vermischen einer vorgegebenen Menge von Polyarylensulfid mit einer vorgegebenen Menge an Chinolin und/oder Isochinolin und/oder deren substituierten Derivaten als Lösungsmittel, wobei das Lösungsmittel bei 25 °C flüssig ist,
ii) Erhitzen der Mischung auf Temperaturen von mindestens 170 °C , bevorzugt über 200 °C , so daß sich zumindest ein Teil des Polymeren in besagtem Lösungsmittel löst, und
iii) gegebenenfalls Abtrennen etwaiger ungelöster Bestandteile des Polymeren.

9. Verwendung der Lösung nach einem der Ansprüche 1 bis 7 zur Herstellung geformter Gebilde, insbesondere von Fasern, Folien und Beschichtungen.

10. Verwendung der Lösung nach einem der Ansprüche 1 bis 7 zur Bestimmung des Molekulargewichts von Polyarylensulfiden.

11. Verwendung der Lösung nach einem der Ansprüche 1 bis 7 zur Reinigung von Polyarylensulfiden.

12. Trockenformverfahren zur Herstellung von Folien und insbesondere von Fasern aus Polyarylensulfiden umfassend die Schritte
a1) Herstellung einer Lösung nach Anspruch 8,
b1) Extrudieren besagter Lösung bei Temperaturen oberhalb von 170 °C durch eine Düse, welche Öffnungen in vorgegebener Anzahl und Form enthält, so daß das gewünschte geformte Gebilde entsteht, und
c1) Verdampfen des Lösungsmittels unter Anwendung erhöhter Temperatur, so daß ein lösungsmittelärmeres geformtes Gebilde entsteht, das eine für die weitere Verarbeitung ausreichende mechanische Stabilität und Klebfreiheit aufweist.

13. Naßformverfahren zur Herstellung von Folien und insbesondere von Fasern aus Polyarylensulfiden umfassend die Schritte:
a2) Herstellung einer Lösung nach Anspruch 8,
b2) Extrudieren besagter Lösung bei Temperaturen oberhalb von 170 °C durch eine Düse, welche Öffnungen in vorgegebener Anzahl und Form enthält, so daß ein primäres geformtes Gebilde entsteht, und
c2) Einbringen dieses geformten Gebildes in ein Bad enthaltend eine Koagulationsflüssigkeit, so daß das Lösungsmittel aus besagtem primären geformten Gebilde entfernt wird und das gewünschte geformte Gebilde durch Koagulation des Primärgebildes entsteht, das eine für die weitere Verarbeitung ausreichende mechanische Stabilität aufweist.

14. Verfahren zur Herstellung von Beschichtungen umfassend die Schritte:
a3) Herstellung einer Lösung nach Anspruch 8,
b3) Aufbringen besagter Lösung bei Temperaturen von mindestens 170 °C auf ein Substrat unter Ausbildung eines Films besgter Lösung auf besagtem Substrat, und
c3) Entfernen des Lösungsmittels aus besagtem Film unter Anwendung von erhöhter Temperatur und/oder Anlegen eines Unterdruckes.

15. Verwendung von Chinolin und/oder Isochinolin und/oder deren substituierten Derivaten zum Lösen von Polyarylensulfid.

16. Verwendung nach Anspruch 15 zum Reinigen von Apparaten und/oder Apparateteilen, die bei der Herstellung der Verarbeitung von Polyarylensulfid eingesetzt worden sind.

17. Verwendung nach Anspruch 16, dadurch gekennzeichnet, daß es sich bei dem Apparateteil um eine Spinndüsenplatte handelt.

18. Verwendung nach Anspruch 16, dadurch gekennzeichnet, daß es sich bei dem Apparateteil um eine Extruderschnecke handelt.

## Claims

1. A solution containing poly(arylene sulfide) and, as solvent, quinoline and/or isoquinoline and/or a substituted derivative thereof, the solvent being liquid at 25°C.

2. The solution as claimed in claim 1, wherein the poly(arylene sulfide) is poly(phenylene sulfide) (PPS), in particular poly(p-phenylene sulfide).

3. The solution as claimed in either claim 1 or claim 2, wherein the solvent is quinoline monosubstituted or disubstituted by a lower alkyl substituent or, in particular, unsubstituted quinoline.

4. The solution as claimed in one of claims 1 to 3, wherein the dissolved polymer is present at a concentration of 0.2 to 1.2 % by weight, based on the solution, at a temperature of 170°C.

5. The solution as claimed in one of claims 1 to 4, wherein the solution has a temperature of between 170 and 200°C.

6. The solution as claimed in one of claims 2 to 5, wherein the poly(phenylene sulfide) (PPS) is an essentially linear PPS which has a melt viscosity of 50 to 1000 Pa*s, measured at 300°C and a shear rate of 200 sec⁻¹.

7. The solution as claimed in one of claims 2 to 6, wherein the poly(phenylene sulfide) (PPS) is a mixture of two essentially linear PPS types, of which one PPS type has a melt flow index of at most 100 g/10 min, and the other PPS type has a melt flow index of at least 120 g/10 min, the measurement being carried out at 315°C at a ram load of 5 kg and a die diameter of 2.095 mm and a die length of 8 mm.

8. A process for the preparation of a solution as claimed in claim 1 including the steps:
i) mixing a predetermined amount of poly(arylene sulfide) with a predetermined amount of quinoline and/or isoquinoline and/or substituted derivatives thereof as solvent, the solvent being liquid at 25°C,
ii) heating the mixture to temperatures of at least 170°C, preferably above 200°C, so that at least some of the polymer dissolves in said solvent, and
iii) if necessary, separating off any undissolved constituents of the polymer.

9. Use of the solution as claimed in one of claims 1 to 7 for the production of shaped bodies, in particular fibers, films and coatings.

10. Use of the solution as claimed in one of claims 1 to 7 for the determination of the molecular weight of poly(arylene sulfides).

11. Use of the solution as claimed in one of claims 1 to 7 for the purification of poly(arylene sulfides).

12. A dry shaping process for the production of films and, in particular, of fibers made of poly(arylene sulfides) including the steps:
a1) preparing a solution as claimed in claim 8,
b1) extruding said solution at temperatures above 170°C through a spinneret which contains orifices in a predetermined number and predetermined shape so that the desired shaped body results, and
c1) evaporating the solvent by the use of elevated temperature, so that a low-solvent shaped body results which has a mechanical stability and freedom from tackiness sufficient for further processing.

13. A wet shaping process for the production of films and, in particular, of fibers made of poly(arylene sulfides) including the steps:
a2) preparing a solution as claimed in claim 8,
b2) extruding said solution at temperatures above 170°C through a spinneret which contains orifices in a predetermined number and predetermined shape so that a primary shaped body results, and
c2) introducing this shaped body into a bath containing a coagulation liquid so that the solvent is eliminated from said primary shaped body and the desired shaped body results by coagulation of the primary body which has a mechanical stability sufficient for further processing.

14. A process for the production of coatings including the steps:
a3) preparing a solution as claimed in claim 8,
b3) applying said solution at temperatures of at least 170°C to a substrate with the formation of a film of said solution on said substrate, and
c3) eliminating the solvent from said film using elevated temperature and/or application of reduced pressure.

15. Use of quinoline and/or isoquinoline and/or a substituted derivative thereof to dissolve poly(arylene sulfide).

16. The use as claimed in claim 15 to clean apparatuses and/or equipment components which have been used in the production or processing of poly(arylene sulfide).

17. The use as claimed in claim 16, wherein the equipment component is a spinneret.

18. The use as claimed in claim 16, wherein the equipment component is an extruder screw.

## Revendications

1. Solutions contenant du polyarylènesulfure et en tant que solvant de la quinoline et/ou de l'isoquinoline et/ou leurs dérivés substitués, le solvant étant liquide à 25°C.

2. Solutions selon la revendication 1, caractérisées en ce que le polyarylènesulfure est du polyphénylènesulfure (PPS), en particulier du poly-p-phénylènesulfure.

3. Solutions selon l'une des revendications 1 ou 2 caractérisées en ce que le solvant est une quinoline substituée une ou deux fois par des alkyles inférieurs ou bien est en particulier la quinoline non substituée.

4. Solutions selon l'une des revendications 1 à 3 caractérisées en ce que le polymère dissout se trouve à une concentration allant de 0,2 à 1,2% en poids par rapport à la solution à une température de 170°C.

5. Solutions selon l'une des revendications 1 à 4, caractérisées en ce que la solution présente une température comprise entre 170 et 200°C.

6. Solutions selon l'une des revendications 2 à 5, caractérisées en ce qu'il s'agit, en ce qui concerne le polyphénylènesulfure (PPS), d'un PPS essentiellement linaire qui possède une viscosité à l'état fondu comprise entre 50 et 1000 Pa.s, mesurée à 300°C, et une vitesse de cisaillement de 200 sec⁻¹.

7. Solutions selon l'une des revendications 2 à 6, caractérisées en ce qu'il s'agit, en ce qu'il concerne le polyphénylènesulfure (PPS), de mélanges de deux types de PPS essentiellement linaires, dont l'un des types de PPS est caractérisé par une valeur de Melt-Flow-Index d'au plus de 100 g/10 min et l'autre type de PPS est caractérisé par une valeur de Melt-Flow-Index d'au moins 120 g/10 min, la mesure se faisant à 315°C pour une charge de poinçon de 5 kg et pour un diamètre de tuyère de 2,095 mm et une longueur de tuyère de 8 mm.

8. Procédé de préparation d'une solution selon la revendication 1 comprenant les étapes suivantes :
i) mélange d' une quantité donné de polyarylènesulfure avec une quantité donnée en quinoline et/ou en isoquinoline et/ou en leurs dérivés substitués en tant que solvant, le solvant étant liquide à 25°C,
ii) chauffage du mélange à des températures d'au moins 170°C, de préférence supérieures à 200°C, de sorte qu'au moins une partie du polymère se dissolve dans ledit solvant, et
iii) éventuellement séparation des constituants du polymère éventuellement non dissous.

9. Utilisation de la solution selon l'une des revendications 1 à 7 pour la préparation d'articles moulés, en particulier de fibres, de feuilles et d'enduits.

10. Utilisation de la solution selon l'une des revendications 1 à 7 en vue de la détermination du point moléculaire de polyarylènesulfures.

11. Utilisation de la solution selon l'une des revendications 1 à 7 en vue de la purification de polyarylènesulfures.

12. Procédé de préparation en forme sèche de feuilles et en particulier de fibres en polyarylènesulfure comprenant les étapes suivantes :
a1) préparation d'une solution selon la revendication 8,
b1) extrusion de ladite solution à des températures supérieures à 170°C au travers d'une tuyère, laquelle contient des ouvertures en nombre et en forme donnés, de sorte que l'on forme l'article moulé désiré, et
c1) évaporation du solvant en appliquant une température élevée, de sorte que l'on forme un article moulé plus pauvre en solvant, qui possède un pouvoir non collant et une stabilité mécanique suffisants pour d'autres traitements.

13. Procédé de préparation en forme mouillée de feuilles et en particulier de fibres en polyarylènesulfure comprenant les étapes suivantes :
a2) préparation d'une solution selon la revendication 8,
b2) extrusion de ladite solution à des températures supérieures à 170°C au travers d'une tuyère, laquelle contient des ouvertures en nombre et en forme donnés, de sorte que l'on forme un article moulé primaire, et
c2) incorporation de cet article moulé dans un bain contenant un liquide de coagulation, de sorte que l'on élimine le solvant dudit article moulé primaire et que l'on forme par coagulation de l'article primaire, l'article moulé désiré qui possède une stabilité mécanique suffisante pour les autres traitements.

14. Procédé de préparation d'enductions comprenant les étapes suivantes :
a3) préparation d'une solution selon la revendication 8,
b3) dépôt de ladite solution à des températures d'au moins 170°C sur un substrat en formant un film de ladite solution sur ledit substrat, et
c3) élimination du solvant dudit film en appliquant une température élevée et/ou en appliquant une dépression.

15. Utilisation de la quinoline et/ou de l'isoquinoline et/ou de leurs dérivés substitués pour dissoudre le polyarylènesulfure.

16. Utilisation selon la revendication 15 pour le nettoyage des appareillages et/ou des pièces de machine, qui sont utilisés lors de la mise en oeuvre du façonnage du polyarylènesulfure.

17. Utilisation selon la revendication 16, caractérisée en ce qu'il s'agit, en ce qui concerne les pièces de machine, d'une platine de filière.

18. Utilisation selon la revendication 16, caractérisée en ce qu'il s'agit, en ce qui concerne les pièces de machine, d'une vis d'extrudeuse.
